(19) Europäisches Patentamt / European Patent Office / Office européen des brevets

(11) **EP 1 982 865 B1**

(12) **EUROPEAN PATENT SPECIFICATION**

(45) Date of publication and mention
of the grant of the patent:
**29.02.2012 Bulletin 2012/09**

(51) Int Cl.:
***B60N 2/46*** *(2006.01)*

(21) Application number: **08007088.1**

(22) Date of filing: **10.04.2008**

(54) **Height adjustment device for heavy equipment console box having weight balancing**

Vorrichtung zur Höhenverstellung für Baumaschinen-Konsolenkisten mit Gewichtsausgleich

Dispositif de réglage de hauteur pour boîte de console d'équipement lourd disposant d'un équilibrage de poids

(84) Designated Contracting States:
**DE FR GB IT**

(30) Priority: **16.04.2007 KR 20070036995**

(43) Date of publication of application:
**22.10.2008 Bulletin 2008/43**

(73) Proprietor: **Volvo Construction Equipment Holding Sweden AB**
**631 85 Eskilstuna (SE)**

(72) Inventor: **Kim, Hak Shin**
**Hoiwon-gu**
**Masan (KR)**

(74) Representative: **Schmidt, Sven Hendrik**
**Dr. Weitzel & Partner**
**Friedenstraße 10**
**89522 Heidenheim (DE)**

(56) References cited:
**JP-A- 6 228 987     JP-A- 9 302 726**
**US-A- 4 344 597     US-A1- 2003 112 583**

## Description

### CROSS-REFERENCE TO RELATED APPLICATION

This application is based on and claims priority from Korean Patent Application No. 10-2007-0036995, filed on April 16, 2007 in the Korean Intellectual Property Office.

### BACKGROUND OF THE INVENTION

### Field of the invention

The present invention relates to a height adjustment device for a heavy equipment console box having weight balancing, which can adjust the height of a control lever of each console box mounted on left and right sides of a cab in accordance with the body shape of an operator so that the operator can operate the control lever on an optimal operating posture.

More particularly, the present invention relates to a height adjustment device for a heavy equipment console box having weight balancing, which can adjust the height of a console box by minimizing load acting on a driving shaft of the console box due to the self-load of the console box, and thus making it possible to rotate the driving shaft even with a small manipulation force.

### Description of the Prior Art

US 2003/112583 A1 discloses an apparatus for adjusting the height of control boxes of a heavy equipment. Therefore, the apparatus is provided with a heavy solid base plate which consists at one end of two rotation shafts and on the other end of a mechanism to rotate the control boxes around the rotation shafts by turning an adjustment knob.

US 4 344 597 A discloses a vehicle seat with fore-and-aft shock isolation having a suspension mounted on an inner bottom surface of a cab and a frame mounted on the suspension. However, the document falls to disclose console boxes as well as locking means having an elastic member for elastically supporting a first locker and a cable for locking and unlocking the forward and backward movement of the upper member against the lower member.

JP 09 302726 A discloses an operating equipment for a construction machine, having a control box which is movable in turning and tilting around an fulcrum.

JP 06 228987 A discloses a rotary type control lever device for a construction machine having springs for turning up the console box when the user wishes to get off the construction equipment.

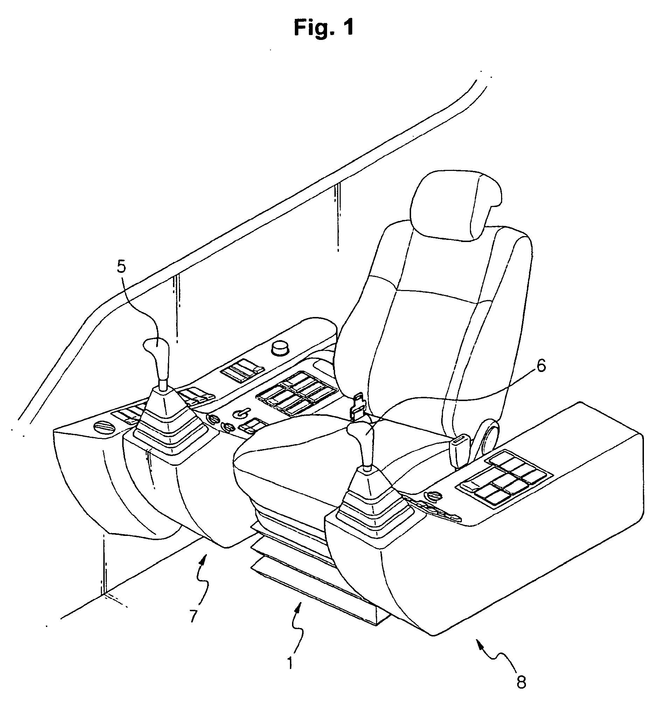

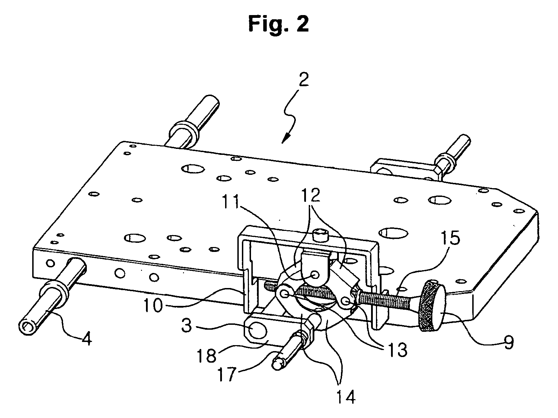

As illustrated in FIGS. 1 and 2, a heavy equipment console box having a conventional height adjustment device includes a base plate 2 mounted on a suspension 1 (in which buffer means is installed) fixed to an inner bottom surface of a cab, and left and right console boxes 7 and 8 mounted on both end parts of a driving shaft 3 and a hinge shaft 4 provided in front and rear of the base plate 2 to rotate about the hinge shaft 4 when a control handle 9 connected to the driving shaft 3 rotates.

On the console boxes 7 and 8, control levers 5 and 6 for controlling a working device, such as a boom, an arm, or the like, in accordance with a manipulation signal corresponding to the amount of manipulation by an operator, are installed, respectively.

The height adjustment device for the console box includes a bracket 10 fixed to one side surface of the base plate 2, a pair of upper arms 12 having upper ends rotatably connected to an upper pin 11 fixed to the bracket 10, a pair of lower arms 14 having upper ends rotatably connected to a pair of adjustment pins 13 fixed to lower ends of the upper arms 12, a control handle 9 having a handle shaft 15 screw-engaged with one of the pair of adjustment pins 13 and passing through the other of the pair of adjustment pins 13 to link the upper arms 12 and the lower arms 14, and a rotary arm 18 having both ends fixed to a lower pin 17 and the driving shaft 3 fixed to lower ends of the lower arms 14 to transfer a rotating force of the control handle 9 to the driving shaft 3.

Accordingly, the upper arms 12 and the lower arms 14 move in left and right directions along the handle shaft 15 in accordance with the rotating direction of the control handle 9, and thus the rotary arm 18 connected to the lower pin 17 is rotated clockwise or counterclockwise, as shown in the drawing.

That is, if the rotary arm 18 is rotated clockwise about the driving shaft 3, the console boxes 7 and 8 fixed to the lower pin 17 are tilted around the hinge shaft 4 to become closer to the cab. Accordingly, the distance between the operator and the control levers 5 and 6 is shortened.

By contrast, if the rotary arm 18 is rotated counterclockwise about the driving shaft 3, the console boxes 7 and 8 are tilted around the hinge shaft 4 to become more distant from the cab. Accordingly, the distance between the operator and the control levers 5 and 6 is lengthened.

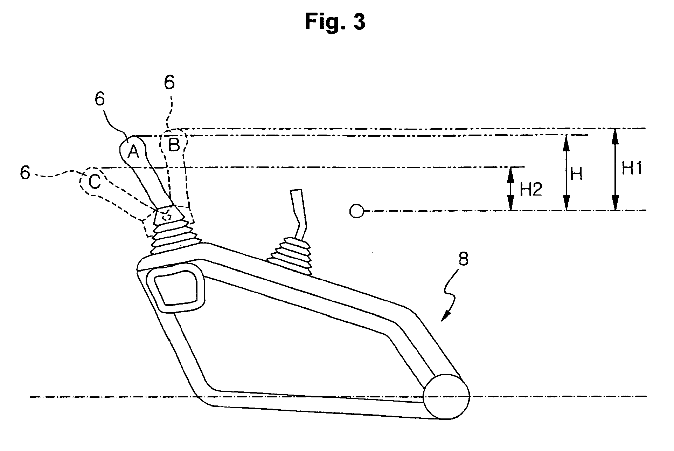

As illustrated in FIG. 3, since the heavy equipment mostly repeats the same work for many hours according to the characteristic of the equipment, an operator adjusts the height of the console box 8 so that the operator can keep an optimal operating posture in accordance with the operating habits and the body shape of the operator.

That is, if it is required for the operator to somewhat heighten the control lever 6 in accordance with the body shape of the operator (i.e., upward movement), he/she rotates the control handle 9 clockwise, so that the height of the control lever 6 installed on the console box 8 can be changed from point "A" (having a height "H") to point "B" (having a height "H1").

At this time, if the operator rotates the control handle 9 to heighten the console box 8, the load due to the self-load of the console box 8 is applied to the driving shaft 3, and thus a large manipulation force is required to rotate the control handle 9.

On the other hand, if it is required for the operator to somewhat lower the control lever 6 (i.e., downward movement), he/she rotates the control handle 9 counterclockwise, so that the height of the control lever 6 installed on the console box 8 can be changed from point "A" (having a height "H") to point "C" (having a height "H2").

At this time, if the operator rotates the control handle 9 to lower the console box 8, the load due to the self-load of the console box 8 is applied to the driving shaft 3, and thus the user can rotate the control handle 9 even with a small manipulation force.

As described above, in the case where the control lever 6 is heightened, a large manipulation force is required to rotate the control handle 9 to cause the operator inconvenience in manipulation, while in the case where the control lever 6 is lowered, the operator can manipulate the control handle 9 even with a small manipulation force. Accordingly, the manipulation force required to adjust the height of the control lever 6 becomes non-uniform to lower the reliability of the equipment.

## SUMMARY OF THE INVENTION

Accordingly, the present invention has been made to solve the above-mentioned problems occurring in the prior art while advantages achieved by the prior art are maintained intact.

One object of the present invention is to provide a height adjustment device for a heavy equipment console box having weight balancing, which can provide convenience to a user by minimizing load acting on a driving shaft of a console box due to the self-load of the console box, and thus making it possible to rotate the driving shaft even with a small manipulation force.

Another object of the present invention is to provide a height adjustment device for a heavy equipment console box having weight balancing, which can heighten the reliability of the equipment by keeping a uniform manipulation force acting on a control handle for rotating a driving shaft of the console box in order to adjust the height of a control lever of the console box.

In order to accomplish these objects, there is provided a height adjustment device for a heavy equipment console box having weight balancing, according to embodiments of the present invention, which includes a suspension mounted on an inner bottom surface of a cab; a lower member mounted on the suspension; an upper member slidably mounted on the lower member in forward and backward directions of the equipment; a buffer means having one end fixed to the lower member and the other end fixed to the upper member to attenuate impact and vibration generated in the forward and backward directions of the equipment by relative movement of the upper member to the lower member; a height adjustment means including a frame mounted on the upper member, a hinge shaft fixed to the frame and having both ends fixed to rear parts of console boxes, a driving shaft rotatably fixed to the frame and having both ends fixed to front parts of the console boxes, and a control handle connected to the driving shaft to adjust the height of the console boxes in accordance with its rotating direction; a locking means for locking and unlocking forward and backward movement of the upper member against the lower member when a pusher installed on one side of the frame is manipulated; and an elastic member having one end fixed to one side surface of the frame and the other end fixed to an outer surface of the driving shaft, the elastic member having a specified tension force so that a manipulation force of the control handle for rotating the driving shaft becomes zero when control levers of the console boxes are set to a specified height.

The height adjustment means may include a rotary shaft rotatably mounted on a bracket fixed in front of one side surface of the frame, and having one end fixed to the control handle and the other end provided with a screw part formed thereon; a union having a screw hole penetratedly formed in the center thereof to be screw-engaged with the screw part, and converting rotational movement of the rotary shaft into rectilineal movement; and a power transfer member having one end rotatably fixed to the union and the other end rotatably fixed to the bracket mounted on an outer surface of the driving shaft; wherein when the control handle is rotated, the union for converting the rotational movement of the rotary shaft into the rectilineal movement pushes or pulls the power transfer member, and thus the driving shaft is rotated about the hinge shaft to adjust the height of the console boxes.

The locking means include locking grooves penetratedly formed on specified positions of a bottom surface of the lower member; lockers rotatably fixed to the upper member and having engagement pieces formed on bottom surfaces thereof to be engaged with the locking grooves, respectively, the locking means including a first locker 72

having a fixing piece formed on an upper surface thereof to project to an upper part of the upper member and a second locker rotatably connected to the first locker; an elastic member for elastically supporting the first locker so that the engagement pieces are locked into the locking grooves; and a cable having one end fixed to a bottom surface of the pusher and the other end fixed to a fixing piece, the cable locking and unlocking the forward and backward movement of the upper member against the lower member by locking and unlocking the engagement pieces into and from the locking grooves in accordance with the manipulation of the pusher.

**BRIEF DESCRIPTION OF THE DRAWINGS**

The above and other objects, features and advantages of the present invention will be more apparent from the following detailed description taken in conjunction with the accompanying drawings, in which:

FIG. 1 is a schematic view illustrating a heavy equipment console box having a conventional height adjustment device;
FIG. 2 is a schematic view illustrating a height adjustment device of FIG. 1;
FIG. 3 is a view explaining a control lever of a console box of which the height is adjusted by the conventional height adjustment device;
FIG. 4 is an exploded perspective view illustrating a height adjustment device for a heavy equipment console box having weight balancing according to an embodiment of the present invention;
FIG. 5 is a front view illustrating a lower member and an upper member, on which a buffer means of FIG. 4 is mounted, in an engaged state;
FIG. 6 is an enlarged view of main parts of a locking means as illustrated in FIG. 4;
FIGS. 7A and 7B are views illustrating the locking means of FIG. 6 in a used state;
FIG. 8 is a schematic view illustrating a tilting means as illustrated in FIG. 4;
FIG. 9 is a perspective view illustrating a tilting means and a buffer means of FIG. 4 in an engaged state;
FIG. 10 is a view illustrating a height adjustment device for a heavy equipment console box having weight balancing in a used state according to an embodiment of the present invention;
FIG. 11 is a front view illustrating a height adjustment device, explaining that a control handle is rotated by a small manipulation force in a height adjustment device for a heavy equipment console box having weight balancing according to an embodiment of the present invention; and
FIG. 12 is a schematic view illustrating a height adjustment device for a heavy equipment console box having weight balancing according to another embodiment of the present invention.

**DETAILED DESCRIPTION OF THE PREFERRED EMBODIMENTS**

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

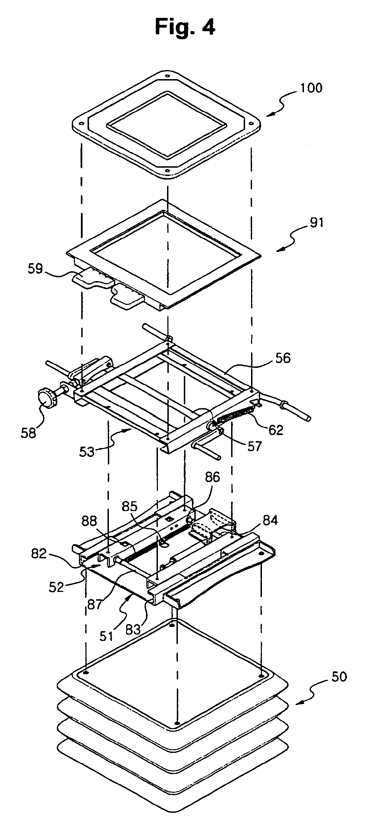

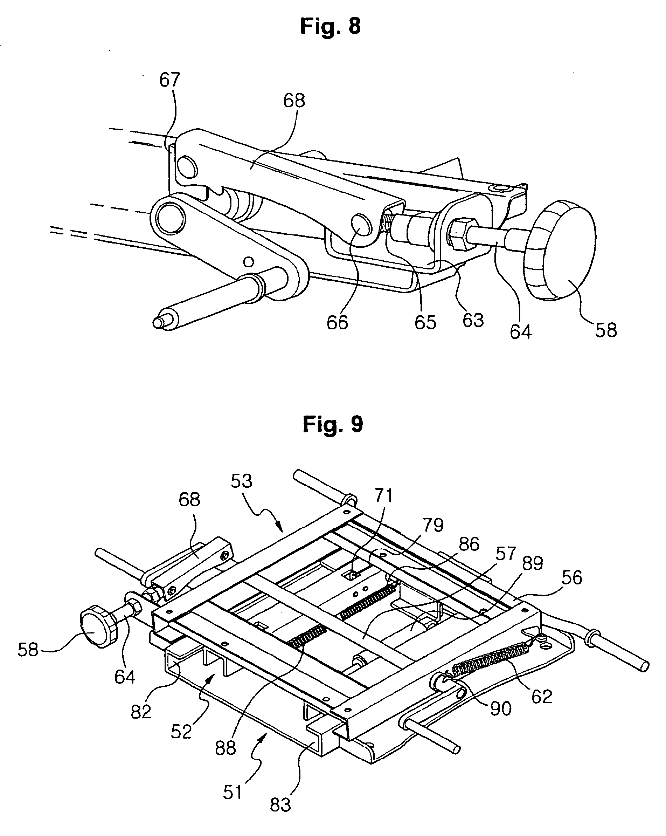

As illustrated in FIGS. 4 to 10, a height adjustment device for a heavy equipment console box having weight balancing according to an embodiment of the present invention includes a suspension 50 mounted on an inner bottom surface of a cab; a lower member 51 mounted on the suspension 50; an upper member 52 slidably mounted on the lower member 51 in forward and backward directions of the equipment; a buffer means having one end fixed to the lower member 51 and the other end fixed to the upper member 52 to attenuate impact and vibration generated in the forward and backward directions of the equipment by relative movement of the upper member 52 to the lower member 51; a height adjustment means including a frame 53 mounted on the upper member 52, a hinge shaft 56 fixed to the frame 53 and having both ends fixed to rear parts of console boxes 54 and 55, a driving shaft 57 rotatably fixed to the frame 53 and having both ends fixed to front parts of the console boxes 54 and 55, and a control handle 58 connected to the driving shaft 57 to adjust the height of the console boxes 54 and 55 in accordance with its rotating direction; a locking means for locking and unlocking forward and backward movement of the upper member 52 against the lower member 51 when a pusher 59 installed on one side of the frame 53 is manipulated; and an elastic member 62 (e.g., a tension coil spring) having one end fixed to one side surface of the frame 53 and the other end fixed to an outer surface of the driving shaft 57, the elastic member 62 having a specified tension force so that a manipulation force of the control handle 58 for rotating the driving shaft 57 becomes zero (i.e., Moment (M) = 0) when control levers 60 and 61 are set to a specified height.

The height adjustment means includes a rotary shaft 64 rotatably mounted on a bracket 63 fixed in front of one side surface of the frame 53, and having one end fixed to the control handle 58 and the other end provided with a screw part 65 formed thereon; a union 66 having a screw hole penetratedly formed in the center thereof to be screw-engaged with the screw part 65, and converting rotational movement of the rotary shaft 64 into rectilineal movement; and a power transfer member 68 having one end rotatably fixed to the union 66 and the other end rotatably fixed to the bracket 67 mounted on an outer surface of the driving shaft 57.

When the control handle 58 is rotated, the union 66 for converting the rotational movement of the rotary shaft 64 into the rectilineal movement pushes or pulls the power transfer member 68, and thus the driving shaft 57 is rotated about the hinge shaft 56 to adjust the height of the console boxes 54 and 55.

The locking means includes locking grooves 69 penetratedly formed on specified positions of a bottom surface of the lower member 51; lockers rotatably fixed to the upper member 52 by engagement pins 76 engaged with engagement grooves 75 formed on the upper member 52, and having engagement pieces 70 formed to project from the bottom surfaces thereof to be locked into and unlocked from the locking grooves 69, respectively, the locking means including a first locker 72 having a fixing piece 71 formed on an upper surface thereof to project to an upper part of the upper member 52 and an engagement pin 77 formed on one side surface thereof, and a second locker 73 having engagement grooves 78 formed on one side surface thereof to be engaged with the engagement pin 77 so that the second locker 73 is rotatably connected to the first locker 72; an elastic member 74 (e.g., a compression coil spring installed between the upper member 52 and an upper surface of the first locker 72) for elastically supporting the first locker 72 so that the engagement pieces 70 are locked into the locking grooves 69; and a cable 79 having one end fixed to a bottom surface of the pusher 59 and the other hand fixed to a fixing piece 71, the cable 79 locking and unlocking the forward and backward movement of the upper member 52 against the lower member 51 by locking and unlocking the engagement pieces 70 into and from the locking grooves 69 in accordance with the manipulation of the pusher 59.

When the operator manipulates the pusher 59, the engagement pieces 70 are locked into and unlocked from the locking grooves 69 by the cable 79, and thus the forward and backward movement of the upper member 52 with respect to the lower member 51 can be locked and unlocked.

The buffer means includes a first elastic member 86 having one end fixed to a first fixing bar 84 formed on the rear of the upper member 52 and the other end fixed to a fixing piece 85 formed in the center position of the lower member 51; a second elastic member 88 having one end fixed to the fixing piece 85 of the lower member 51 and the other end fixed to a second fixing bar 87 formed in front of the upper member 52, the second elastic member 88 being arranged in the same line as the first elastic member 86; and a damper 89 having a head part fixed to the rear of the upper member 52 and a rod part fixed to a fixing piece (not illustrated) formed in front of the lower member 51, the damper 89 being arranged opposite to the first and second elastic members 86 and 88.

The first and second elastic members 86 and 88 and the damper 89 are installed to apply a tension force and a buffering force in forward and backward directions of the equipment (i.e., the X-axis direction in which the equipment travels).

In the drawings, the reference numeral 91 denotes a plate having one front side on which the pusher 59 is rotatably installed, and mounted on the frame 53, and the reference numeral 100 denotes a plate mounted on the frame 53 and on which a seat is detachably placed.

Hereinafter, the operation of the height adjustment device for a heavy equipment console box having weight balancing according to an embodiment of the present invention will be described with reference to the accompany drawings.

In the height adjustment device for a heavy equipment console box having weight balancing according to an embodiment of the present invention, the constructions, such as the suspension 50 installed on the inner bottom surface of the cab, the console boxes 54 and 55 for controlling the working device such as a boom in accordance with the amount of manipulation of the control levers 60 and 61, and the like, are substantially the same as those as illustrated in FIG. 1, and thus the detailed description of their construction and operation will be omitted.

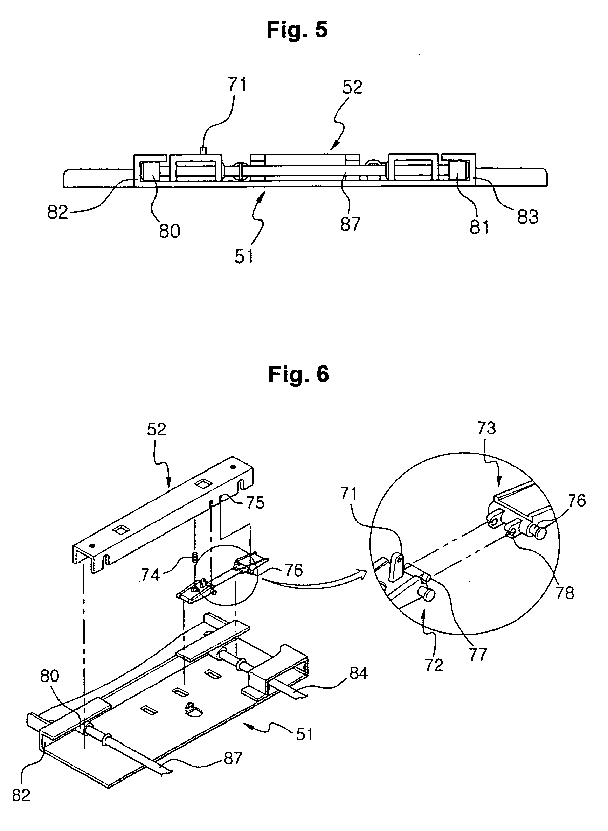

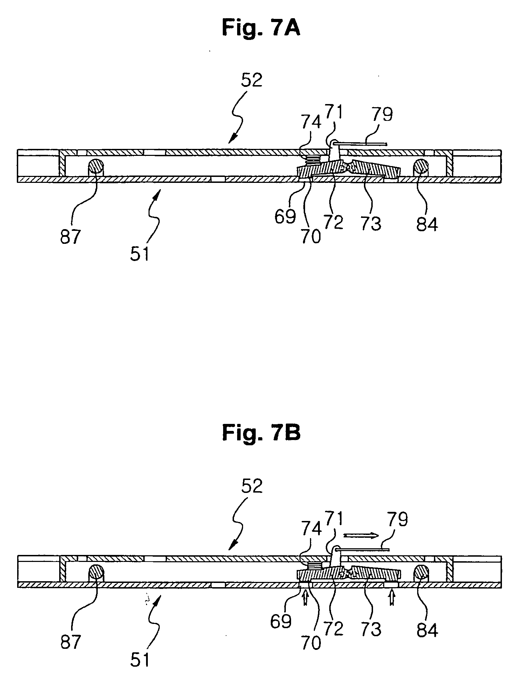

As illustrated in FIGS. 6 and 7B, when the pusher 59 formed in front of the frame 53 is pressed downward, as shown in the drawing, the first and second lockers 72 and 73 are pulled toward the rear of the equipment by the tension force of the cable 79 fixed to the bottom surface of the pusher 59. Due to the rotation of the first and second lockers 72 and 73, the engagement pieces 70 formed on the bottom surface of the first and second lockers 72 and 73 secede from the locking grooves 69 of the lower member 51, respectively, so that the upper member 52 is unlocked from the lower member 51.

Accordingly, the relative movement of the upper member 52 to the lower member 51 becomes possible. That is, rollers 80 and 81 installed on left and right sides of the upper member 52 can slide in forward and backward directions of the equipment in a specified section along guide rails 82 and 83 formed on left and right sides of the lower member 51.

Accordingly, in the case where an impact or vibration is applied in forward and backward directions of the equipment during working or traveling of the equipment, the relative movement of the upper member 52 to the lower member 51 becomes possible due to the tension force acting in the forward and backward directions through the first and second elastic members 86 and 88. In addition, the relative movement of the upper member 52 to the lower member 51 becomes possible due to the buffer force acting in the forward and backward directions through the damper 89.

As described above, since the relative movement of the upper member 52 to the lower member 51 becomes possible due to the tension force of the first and second elastic members 86 and 88 and the buffer force of the damper 89, the impact and the vibration generated in the forward and backward directions of the equipment can be attenuated during the working or traveling of the equipment.

On the other hand, as illustrated in FIG. 7A, when the pusher 59 is lifted up to the initial position by the operator, the fixing piece 71 is pressed toward the front of the equipment by the compression force of the cable 79. Due to the rotation of the first and second lockers 72 and 73, the engagement pieces 70 formed on the bottom surface of the first and second lockers 72 and 73 are engaged with the locking grooves 69 of the lower member 51, respectively, so that the upper member 52 is locked in the lower member 51.

Accordingly, the relative movement of the upper member 52 to the lower member 51 becomes impossible, and thus the buffer function for attenuating the impact and vibration generated in the forward and backward directions of the equipment is released.

On the other hand, since the heavy equipment mostly repeats the same work for many hours according to the characteristic of the equipment, the operator adjusts the height of the console boxes 54 and 55 so that the operator can keep an optimal operating posture in accordance with the operating habits and the body shape of the operator.

When the control handle 58 is rotated clockwise by the operator, the rotational movement of the rotary shaft 64 is converted into the rectilineal movement by the union 66 screw-engaged with the other end of the rotary shaft 64. Accordingly, the power transfer member 68 rotatably fixed to the union 66 is pushed toward the rear of the equipment.

Accordingly, the driving shaft 57 rotatably fixed to the front of the left and right console boxes 54 and 55 is rotated clockwise, as shown in the drawing, and thus the console boxes 54 and 55 are lifted up to the operator.

By contrast, when the control handle 58 is rotated counterclockwise, the power transfer member 68 is pulled toward the front of the equipment by the union 66 screw-engaged with the other end of the rotary shaft 64. Accordingly, the driving shaft 57 rotatably fixed to the front of the console boxes 54 and 55 is rotated counterclockwise, as shown in the drawing, and thus the console boxes 54 and 55 are pulled down to the inner bottom surface of the cab.

Accordingly, the user can manipulate the control levers 60 and 61 of the console boxes 54 and 55 mounted on left and right sides of the cab on the optimal operating posture required in accordance with the body shape of the operator. Accordingly, the operator's fatigue is reduced, and thus the operator can work in an agreeable working environment.

At this time, by the tension force of the elastic member 62 (e.g., tension coil spring) having on end fixed to one side surface of the frame 53 and the other end fixed to a hook part 90 formed on the outer surface of the driving shaft 57, the control handle 58 is manipulated by a small manipulation force to adjust the height of the console boxes 54 and 55.

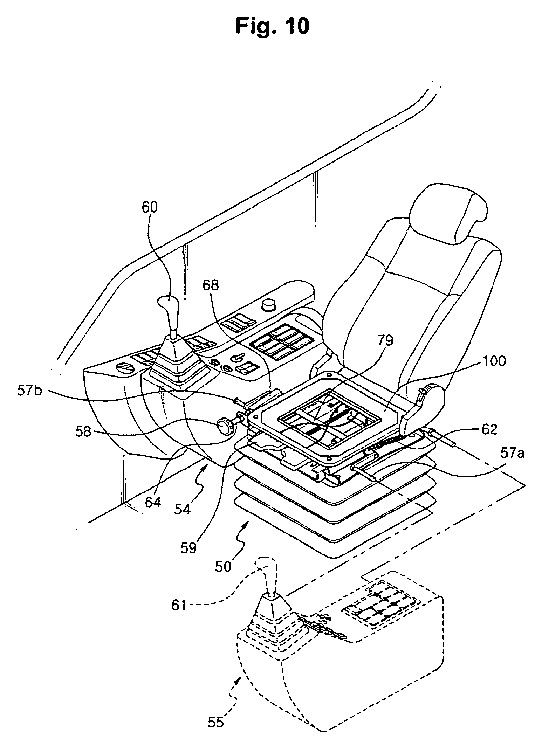

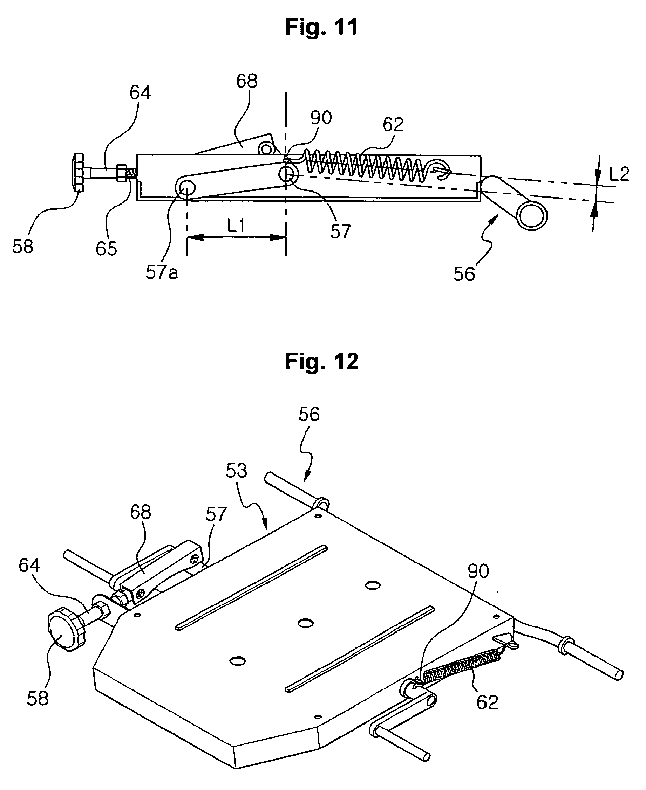

As illustrated in FIGS. 10 and 11, if the control handle 58 is rotated and the moment becomes zero based on the driving shaft 57, the following equations (1) and (2) are materialized.

$$((P(LH) \times L1) + (P(RH) \times L1)) = (P(SPRING) \times L2) \qquad ..... \quad (1)$$

$$P(SPRING) = ((P(LH) \times L1) + (P(RH) \times L1)) / L2 \qquad ..... \quad (2)$$

In this case, *P(LH)* means a rotating force acting on a lever 57a formed at the right end of the driving shaft 57 to rotate the right console box 55, and *P(RH)* means a rotating force acting on a lever 57b formed at the left end of the driving shaft 57 to rotate the left console box 54. Also, *L1* is a vertical distance between the center axis of the driving shaft 57 and the center axis of the levers 57a and 57b, *L2* is a vertical distance between the center axis of the driving shaft 57 and the center point on which the tension force of the elastic member 62 acts, and *P(SPRING)* is the tension force acting on the elastic member 62.

That is, when the control levers 60 and 61 of the console boxes 54 and 55 are set to a position at a specified height, the force required to manipulate the control handle 58 becomes zero (it is defined that the moment value in position "A" of the control lever as illustrated in FIG. 3 is "0") due to the tension force of the elastic member 62, and thus the height of the console boxes 54 and 55 can be adjusted by rotating the driving shaft 57 even with a small manipulation force.

Accordingly, when the console boxes 54 and 55 are lifted up to the operator side through manipulation of the control handle 58 clockwise, a small manipulation force is required due to the tension force of the elastic member 62, and this provides convenience to the operator. In addition, when the console boxes 54 and 55 are pulled down to the bottom surface of the cab through manipulation of the control handle 58 counterclockwise, the same manipulation force as that required to lift up the console boxes 54 and 55 is required due to the tension force of the elastic member 62, and thus the reliability of the equipment is heightened.

As illustrated in FIG. 12, a height adjustment device for a heavy equipment console box having weight balancing according to another embodiment of the present invention includes a suspension 50 mounted on an inner bottom surface of a cab; a frame 53 mounted on the suspension 50; a height adjustment means including a hinge shaft 56 fixed to the frame 53 and having both ends fixed to rear parts of console boxes 54 and 55, a driving shaft 57 rotatably fixed to the frame 53 and having both ends fixed to front parts of the console boxes 54 and 55, and a control handle 58 connected to the driving shaft 57 to adjust the height of the console boxes 54 and 55 in accordance with its rotating direction; and an elastic member 62 (e.g., a tension coil spring) having one end fixed to one side surface of the frame 53 and the other hand fixed to an outer surface of the driving shaft 57, the elastic member 62 having a specified tension force so that a manipulation force of the control handles 58 for rotating the driving shaft 57 becomes zero when control levers 60 and 61 installed on the console boxes 60 and 61 are set to a specified height.

In the above-described construction, the height adjustment means and the elastic member 62 are substantially the same as those according to an embodiment of the present invention, and thus the detailed description thereof will be omitted. The same drawing reference numerals are used for the same elements across various figures.

In the height adjustment device for a heavy equipment console box having weight balancing according to another embodiment of the present invention, the height adjustment means of the console boxes 54 and 55 is installed on one side surface of the frame 53, and both end parts of the elastic member 62 (e.g., tension coil spring) are installed on the other surface of the frame 53 and the outer surface of the driving shaft 57, respectively.

Accordingly, the number of corresponding components is reduced in comparison to the height adjustment device for a heavy equipment console box having weight balancing according to an embodiment of the present invention, and thus the manufacturing cost can be reduced.

As described above, the height adjustment device for heavy equipment console box having weight balancing according to the embodiments of the present invention has the following advantages.

The load acting on the driving shafts of the console boxes due to the self-load of the console boxes installed on left and right sides of the cab can be minimized, and thus the height of the console boxes can be adjusted by rotating the driving shaft even with a small manipulation force.

In addition, in order to adjust the height of the control levers of the console boxes, it is possible to keep a uniform manipulation force acting on the control levers of the console boxes for rotating the driving shafts of the console boxes, and thus the reliability of the equipment can be heightened.

Although preferred embodiment of the present invention has been described for illustrative purposes, those skilled in the art will appreciate that various modifications, additions and substitutions are possible, without departing from the scope and spirit of the invention as disclosed in the accompanying claims.

**Claims**

1.   A height adjustment device for a heavy equipment console box (54, 55) having weight balancing, comprising:

a suspension (50) mounted on an inner bottom surface of a cab;
a lower member (51) mounted on the suspension;
an upper member (52) slidably mounted on the lower member (51) in forward and backward directions of the equipment;
a buffer means having one end fixed to the lower member (51) and the other end fixed to the upper member (52) to attenuate impact and vibration generated in the forward and backward directions of the equipment by relative movement of the upper member (52) to the lower member (51);
a height adjustment means including a frame (53) mounted on the upper member (52), a hinge shaft (56) fixed to the frame (53) and having both ends fixed to rear parts of console boxes (54, 55), a driving shaft (57) rotatably fixed to the frame (53) and having both ends fixed to front parts of the console boxes (54, 55), and a control handle (58) connected to the driving shaft (57) to adjust the height of the console boxes (54, 55) in accordance with its rotating direction;
a locking means for locking and unlocking forward and backward movement of the upper member (52) against the lower member (51) when a pusher (59) installed on one side of the frame (53) is manipulated; and
an elastic member (62) having one end fixed to one side surface of the frame (53) and the other end fixed to an outer surface of the driving shaft (57), the elastic member (62) having a specified tension force so that a manipulation force of the control handle (58) for rotating the driving shaft (57) becomes zero when control levers of the console boxes (54, 55) are set to a specified height;
wherein the locking means comprises locking grooves (69) penetratedly formed on specific positions of a bottom surface of the lower member (51) ;
lockers rotably fixed to the upper member (52) and having engagement pieces (70) formed on bottom surfaces thereof to be engaged with the locking grooves (69), respectively, the locking means including a first locker (72)

having a fixing piece (71) formed on an upper surface thereof to project to an upper part of the upper member (52) and a second locker (73) rotably connected to the first locker (72),

an elastic member (74) for elastically supporting the first locker (72) so that the engagement pieces (70) are locked into the locking grooves (69), and

a cable (79) having one end fixed to a bottom surface of the pusher (59), and the other hand fixed to a fixing piece, the cable (79) locking and unlocking the forward and backward movement of the upper member (52) against the lower member (51) by locking and unlocking the engagement pieces (70) into and from the locking grooves (69) in accordance with the manipulation of the pusher.

2. The height adjustment device of claim 1, wherein the height adjustment means comprises:

a rotary shaft (64) rotatably mounted on a bracket (67) fixed in front of one side surface of the frame (53), and having one end fixed to the control handle (58) and the other end provided with a screw part (65) formed thereon;

a union (66) having a screw hole penetratedly formed in the center thereof to be screw-engaged with the screw part (65), and converting rotational movement of the rotary shaft (64) into rectilineal movement; and

a power transfer member (68) having one end rotatably fixed to the union (66) and the other end rotatably fixed to the bracket (67) mounted on an outer surface of the driving shaft (57);

wherein when the control handle (58) is rotated, the union (66) for converting the rotational movement of the rotary shaft (64) into the rectilineal movement pushes or pulls the power transfer member (68), and thus the driving shaft (57) is rotated about the hinge shaft (56) to adjust the height of the console boxes (54, 55).

**Patentansprüche**

1. Vorrichtung zur Höhenverstellung für einen Baumaschinen-Konsolenkasten (54, 55) mit Gewichtsausgleich, umfassend:

eine Aufhängung (50), die an einer inneren unteren Fläche einer Kabine angebracht ist;

ein unteres Element (51), das auf der Aufhängung gelagert ist,

ein oberes Element (52), das in Vor- und Rückwärtsrichtung der Baumaschine auf dem unteren Element (51) verschieblich gelagert ist;

ein Puffermittel, dessen eines Ende am unteren Element (51) und dessen anderes Ende am oberen Element (52) befestigt ist, zur Dämpfung der durch die Relativbewegung des oberen Elementes (52) im Verhältnis zum unteren Element (51) in Vor- und Rückwärtsrichtung der Baumaschine hervorgebrachten Stösse und Vibrationen;

ein Höhenverstellungsmittel mit einem auf dem oberen Element (52) gelagerten Rahmen (53), eine Scharnierwelle (56), die am Rahmen (53) befestigt ist und deren beide Enden an hinteren Elementen der Konsolenkästen (54, 55) befestigt sind, eine Antriebswelle (57), die am Rahmen (53) drehbar befestigt ist und deren beide Enden an vorderen Elementen der Konsolenkästen (54, 55) befestigt sind, und einen mit der Antriebswelle (57) verbundenen Bedienungsgriff (58), zur Höhenverstellung der Konsolenkästen (54, 55) je nach deren Drehrichtung;

ein Verriegelungsmittel zur Ver- und Entriegelung der Vorwärts- und Rückwärtsbewegung des oberen Elementes (52) gegen das untere Element (51), wenn ein auf der einen Seite des Rahmens (53) angebrachter Schieber (59) betätigt wird; und

ein elastisches Teil (62), dessen eines Ende an einer Seitenfläche des Rahmens (53) befestigt ist und dessen anderes Ende an einer äusseren Fläche der Antriebswelle (57) befestigt ist, wobei das elastisches Teil (62) eine vorgegebene Spannkraft aufweist, so dass eine Betätigungskraft des Bedienungsgriffs (58) zum Drehen der Antriebswelle (57) Null wird, wenn Schalthebel der Konsolenkästen (54, 55) auf eine bestimmte Höhe eingestellt werden;

wobei das Verriegelungsmittel Verriegelungskerben (69) umfasst, die in bestimmten Positionen einer unteren Fläche des unteren Elementes (51) eindringend ausgebildet sind,

Verriegelungsteile, die am oberen Element (52) drehbar befestigt sind und zum jeweiligen Eingriff in die Verriegelungskerben (69) Eingriffteile umfassen, die an unteren Flächen des oberen Elementes angeformt sind, wobei das Verriegelungsmittel ein erstes Verriegelungsteil (72) mit einem Befestigungsteil (71), das an einer oberen Fläche des Befestigungsteils angeformt ist und zum oberen Teil des oberen Elements (52) vorragt, und

ein zweites, mit dem ersten Verriegelungsteil (72) drehbar verbundenes Verriegelungsteil (73) umfasst,

ein elastisches Teil (74) zur federnden Unterstützung des ersten Verriegelungsteils (72), so dass die Eingriffteile (70) mit den Verriegelungskerben (69) in Eingriff stehen, und

ein Seil (79), dessen eines Ende an einer unteren Fläche des Schiebers (59) befestigt ist, und dessen anderes Ende an einem Befestigungsteil befestigt ist, wobei das Seil (79) zur Ver- und Entriegelung der Vor- und Rückwärtsbewegung des oberen Elementes (52) gegen das untere Element (51) dient, indem die Eingriffteile (70) je nach Betätigung des Schiebers mit den Verriegelungskerben (69) verriegelt und aus diesen entriegelt werden.

2. Vorrichtung zur Höhenverstellung nach Anspruch 1, wobei das Höhenverstellungsmittel die folgenden Teile umfasst:

eine Drehwelle (64), die drehbar an einem vor einer Seitenfläche des Rahmens (53) befestigten Bügel (67) gelagert ist, und wobei ein Ende am Bedienungsgriff (58) befestigt und das andere Ende mit einem darauf gebildeten Schraubteil (65) ausgestattet ist;

einen Anschluss (66) mit einem Schraubenloch, das zum Schraubeingriff mit dem Schraubteil (65) im Zentrum dieses Anschlusses eindringend ausgebildet ist, und zur Umwandlung der Rotationsbewegung der Drehwelle (64) in eine geradlinige Bewegung dient; und

ein Kraftübertragungselement (68) dessen eines Ende am Anschluss (66) drehbar befestigt und dessen anderes Ende an einem an einer äusseren Fläche der Antriebswelle (57) gelagerten Bügel (67) drehbar befestigt ist;

wobei wenn der Bedienungsgriff (58) gedreht wird, drückt bzw. zieht der Anschluss (66) zur Umwandlung der Rotationsbewegung der Drehwelle (64) in eine geradlinige Bewegung das Kraftübertragungselement (68), so dass die Antriebswelle (57) zur Höhenverstellung der Konsolenkästen (54, 55) um die Scharnierwelle (56) gedreht wird.

## Revendications

1. Dispositif de réglage de hauteur pour boîte de console d'équipement lourd (54, 55) présentant un équilibrage de poids, comprenant:

une suspension (50) montée sur une surface inférieure intérieure d'une cabine;

un élément inférieur (51) monté sur la suspension ;

un élément supérieur (52) monté de manière coulissante sur l'élément inférieur (51) dans les directions avant et vers l'arrière de l'équipement;

un moyen tampon ayant une extrémité fixée à l'élément inférieur (51) et l'autre extrémité fixée à l'élément supérieur (52) pour atténuer les impacts et les vibrations générés dans les directions avant et arrière de l'équipement par le mouvement relatif de l'élément supérieur (52) par rapport à l'élément inférieur (51);

un moyen de réglage de hauteur comportant un cadre (53) monté sur l'élément supérieur (52), un arbre à charnière (56) fixé au cadre (53) et dont les deux extrémités sont fixées aux parties arrière des boîtes de console (54, 55), un arbre d'entraînement (57) fixé en rotation au cadre (53) et dont les deux extrémités sont fixées aux parties avant des boîtes de console (54, 55), et une poignée de commande (58) connecté à l'arbre d'entraînement (57) pour ajuster la hauteur des boîtes de console (54, 55) en fonction de son direction de rotation;

un moyen de verrouillage permettant de verrouiller et de déverrouiller le mouvement avant et arrière de l'élément supérieur (52) contre l'élément inférieur (51) en cas de manipulation d'un poussoir (59) installé d'un côté du cadre (53); et

un élément élastique (62) ayant une extrémité fixée à une surface latérale du cadre (53) et l'autre extrémité fixée à une surface externe de l'arbre d'entraînement (57), l'élément élastique (62) ayant une force de tension spécifique pour qu'une force de manipulation de la poignée de commande (58) permettant de faire tourner l'arbre d'entraînement (57) soit nulle lorsque des leviers de commande des boîtes de console (54, 55) sont réglés à une hauteur spécifique;

où le moyen de verrouillage comprend des rainures de verrouillage (69) pénétrant dans des positions spécifiques d'une surface inférieure de l'élément inférieur (51);

des verrous fixés en rotation à l'élément supérieur (52) et ayant des pièces d'embrayage (70) constituées sur des surfaces inférieures de celui-ci pour embrayer les rainures de verrouillage (69), respectivement, le moyen de verrouillage comportant un premier verrou (72) ayant une pièce de fixation (71) formée sur une surface supérieure de celui-ci pour faire saillie vers une partie supérieure de l'élément supérieur (52) et un second verrou (73) connecté en rotation au premier verrou (72),

un élément élastique (74) pour soutenir élastiquement le premier verrou (72) pour verrouiller les pièces d'embrayage (70) dans les rainures de verrouillage (69), et

un câble (79) ayant une extrémité fixée à une surface inférieure du poussoir (59), et l'autre extrémité fixée à une pièce de fixation, le câble (79) permettant de verrouiller et de déverrouiller le mouvement avant et arrière de l'élément supérieur (52) contre l'élément inférieur (51) en verrouillant et déverrouillant les pièces d'embrayage (70) dans les rainures de verrouillage (69) selon la manipulation du poussoir.

**2.** Dispositif de réglage de hauteur selon la revendication 1, où le moyen de réglage de hauteur comprend :

un arbre de rotation (64) monté en rotation sur un support (67) fixé devant une surface latérale du cadre (53), et ayant une extrémité fixée à la poignée de commande (58) et l'autre extrémité munie d'une partie vissage (65) formée sur celle-ci;
un raccord (66) présentant un trou de vis pénétrant au centre de celui-ci pour se visser dans la partie vissage (65), et conversion du mouvement de rotation de l'arbre rotatif (64) en mouvement rectiligne; et
un élément de transfert de force (68) ayant une extrémité fixée en rotation au raccord (66) et l'autre extrémité fixée en rotation au support (67) monté sur une surface externe de l'arbre d'entraînement (57);
où lorsque l'on fait tourner la poignée de commande (58), le raccord (66) permettant la conversion du mouvement de rotation de l'arbre rotatif (64) en mouvement rectiligne pousse ou tire l'élément de transfert de force (68), et ainsi l'arbre d'entraînement (57) est mis en rotation autour de l'arbre à charnière (56) pour ajuster la hauteur des boîtes de console (54, 55).

# Fig. 1

# Fig. 2

# Fig. 3

# Fig. 4

# Fig. 5

# Fig. 6

## Fig. 7A

## Fig. 7B

# Fig. 8

# Fig. 9

# Fig. 10

## Fig. 11

## Fig. 12

**EP 1 982 865 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020070036995
- US 2003112583 A1
- US 4344597 A
- JP 9302726 A
- JP 6228987 A